(19) Europäisches Patentamt
European Patent Office
Office européen des brevets

(11) Veröffentlichungsnummer: **0 643 090 A2**

(12) # EUROPÄISCHE PATENTANMELDUNG

(21) Anmeldenummer: **94112948.8**

(22) Anmeldetag: **19.08.94**

(51) Int. Cl.[6]: **C08J 3/03**, C08L 83/04, D06M 15/643

(30) Priorität: **13.09.93 DE 4330967**

(43) Veröffentlichungstag der Anmeldung: **15.03.95 Patentblatt 95/11**

(84) Benannte Vertragsstaaten: **AT BE CH DE DK ES FR GB IT LI NL PT SE**

(71) Anmelder: **Pfersee Chemie GmbH**
**Rehlingerstrasse 1**
**D-86462 Langweid a. Lech (DE)**

(72) Erfinder: **Dirschl, Franz, Dr.**
**Regerstr. 24**
**D-81541 München (DE)**
Erfinder: **Chrobaczek, Harald, Dr.**
**Oblatterwallstr. 38**
**D-86153 Augsburg (DE)**
Erfinder: **Augart, Rainer**
**Kirschenweg 12**
**D-86672 Thierhaupten (DE)**
Erfinder: **Kienle, Hans-Ludwig**
**Neudecker Str. 13 a**
**D-86199 Augsburg (DE)**
Erfinder: **Uhl, Jürgen**
**Schulstr. 10**
**D-86502 Laugna (DE)**

(54) **Organische Siliciumverbindungen enthaltende Zusammensetzungen für die Behandlung von Fasermaterialien.**

(57) Zusammensetzungen in Form wäßriger Dispersionen, welche Dihydroxypolyorganosiloxane, aminofunktionelle Silane und cyclische Oligosiloxane und/oder Umsetzungsprodukte dieser Komponenten enthalten, eignen sich für die Beschichtung von Flächengebilden aus Fasermaterialien. Den Flächengebilden werden hierdurch gute Wasserdichteigenschaften bei guter Permanenz der Wasserdichtheit, gute Kälteflexibilität und Sprungelastizität verliehen.

EP 0 643 090 A2

Die Erfindung betrifft Zusammensetzungen in Form wäßriger Dispersionen, welche neben Wasser und einem oder mehreren Dispergatoren drei oder mehr organische Siliciumverbindungen bestimmter Strukturen enthalten. Sie betrifft ferner ein Verfahren zur Beschichtung von Fasermaterialien unter Verwendung dieser Zusammensetzungen.

Es ist bekannt, Fasermaterialien in Form von Flächengebilden wie z.B. nichtgewebte Flächengebilde (non-wovens), Vliese, Gewebe oder Maschenware mit Zusammensetzungen zu behandeln, welche organische Siliciumverbindungen, insbesondere Organopolysiloxane, enthalten. Das Aufbringen der Zusammensetzungen auf die Flächengebilde aus Fasermaterialien kann nach verschiedenen Methoden erfolgen. Welche Methode im Einzelfall gewählt wird, hängt unter anderem von den gewünschten Artikeleigenschaften ab. Falls eine gute Wasserdichtheit der Fasermaterialien erzielt werden soll, empfiehlt es sich, die Organopolysiloxan enthaltenden Zusammensetzungen mittels Beschichtungsverfahren auf die Flächengebilde aus Fasermaterialien aufzubringen. Weiterhin ist es häufig von Vorteil, geschlossene Filme mit guter Wasserdichtheit auf den Fasermaterialien dadurch zu erzeugen, daß man für die Beschichtung Zusammensetzungen verwendet, die auf den Fasermaterialien in Form vernetzter Polymerstrukturen vorliegen.

Die Beschichtung von Flächengebilden aus Fasermaterialien mit Organopolysiloxanen enthaltenden Zusammensetzungen ist aus dem Stand der Technik bekannt. So beschreibt die EP-A 370 326 die Verwendung von Copolymeren aus Organosiloxanen und Acrylaten.

Die US-A 3 398 017 und die US-A 4 128 675 behandeln ebenfalls Beschichtung mit Copolymeren. Aus der DE-A 37 30 780 ist die Beschichtung mittels Verwendung von Polyurethanen bekannt.

Die aus dem genannten Stand der Technik bekannten Zusammensetzungen weisen Nachteile auf. Die Verwendung von Polyacrylaten, Polyurethanen oder Copolymeren, welche außer Organopolysiloxan noch größere Anteile von Acrylat- oder Urethaneinheiten enthalten, kann bei den beschichteten Fasermaterialien zu unerwünschter Thermomigration von Dispersionsfarbstoffen führen. Die Sprungelastizität, d.h. die Formstabilität und Formerholung der Fasermaterialien nach mechanischer Belastung ist im Fall der Verwendung oder Mitverwendung von Acrylat- oder Polyurethanstrukturen nicht optimal.

Die Kälteflexibilität der beschichteten Materialien ist bei Verwendung von Polyurethan, insbesondere aber von Polyacrylat enthaltenden Produkten ungenügend, da die entsprechende auf der Oberfläche der Fasermaterialien vorliegende Schicht bei tiefen Temperaturen steif und brüchig wird. Ein Bruch dieser in der Kälte wenig flexiblen Schicht führt zu einer Einbuße in der Wasserdichtheit der Beschichtung.

Auf Grund der geschilderten Nachteile von Zusammensetzungen, welche Polymere oder Copolymere mit größeren Anteilen an Acrylat- oder Urethaneinheiten enthalten, wurde bereits versucht, Zusammensetzungen zu entwickeln, welche frei von Produkten mit Acrylat- oder Urethaneinheiten sind. Das Ziel war hierbei, Produkte einzusetzen, welche Polymere enthalten, die ganz oder überwiegend aus Organosiloxaneinheiten bestehen. Beispielsweise wurden Versuche mit Organopolysiloxanen in organischen Lösungsmitteln durchgeführt. Der Nachteil solcher Formulierungen besteht in Kosten und Ökologieaspekten wegen der Verwendung organischer Lösungsmittel. Versuche, diese Organopolysiloxane in Form wäßriger Dispersionen einzusetzen, scheiterten daran, daß ohne Zusatz von relativ hohen Mengen an Dispergatoren und von weiteren Polymeren wie Polyacrylaten, Polyurethanen oder Polyvinylalkohol keine stabilen wäßrigen Dispersionen bzw. keine wasserdichten Filme erhalten wurden.

Schließlich beschreibt die US-A 4 277 382 Organopolysiloxan enthaltende Zusammensetzungen für die Beschichtung von nicht-flächigen Glasfasermaterialien wie Glasfaserkabeln oder von Metalloberflächen. Die dort genannten Zusammensetzungen weisen jedoch Nachteile auf, wenn sie für die Beschichtung von flächenhaften Fasermaterialien aus organischen Polymeren wie z.B. textilen Flächengebilden verwendet werden. So sind einerseits relativ hohe Temperaturen für die Aushärtung bzw. Vernetzung dieser Produkte erforderlich. Zum anderen ist die Permanenz der erzielten Wasserdichtheit auf textilen Flächengebilden nicht optimal.

Um die geschilderten Nachteile von aus dem Stand der Technik bekannten Produkten zu reduzieren, lag der vorliegenden Erfindung die Aufgabe zugrunde, Zusammensetzungen zu entwickeln, welche sich gut für die Beschichtung von Fasermaterialien in Form von non-wovens (Vliesen), Geweben oder Maschenware eignen. Diese Zusammensetzungen sollten zu guter Wasserdichtheit, guter Permanenz der Wasserdichtheit, guter Kälteflexibilität und guter Sprungelastizität der beschichteten Fasermaterialien führen. Die bei aus dem Stand der Technik bekannten Zusammensetzungen auftretende unerwünschte Thermomigration von Dispersionsfarbstoffen sollte durch die Verwendung der neuen Zusammensetzungen unterbunden oder zumindest deutlich reduziert werden. Ferner sollten die zu entwickelnden Zusammensetzungen als stabile wäßrige Dispersionen vorliegen, die frei oder nahezu frei von organischen Lösungsmitteln sind, und sie sollten nach Beschichtung der Fasermaterialien und Aushärtung zu wasserdichten Beschichtungen führen, die als Polymerkomponenten Produkte enthalten, die frei oder im wesentlichen frei von Acrylat-, Polyurethan- und Polyvinylalkoholeinheiten sind.

Die Aufgabe wurde gelöst durch eine Zusammensetzung in Form einer wäßrigen Dispersion, welche Wasser und folgende Komponenten enthält

a) ein Organopolysiloxan oder ein Gemisch von Organopolysiloxanen der Formel (I)

$$R'' - Si(R)_2 - O -\!\!\left[ Si(R')_2 - O \right]_{n1}\!- Si(R)_2 - R'' \qquad (I)$$

worin die Reste R' unabhängig voneinander für R oder für

$$-\!\!\left[O - Si(R)_2\right]_{n2}\!- O\,Si(R)_2$$

R'' stehen und die Reste R'' unabhängig voneinander für R, OH oder für OR stehen, wobei jedoch mindestens zwei aller anwesenden Reste R'' für OH oder für OR stehen,
worin n1 und n2 solche Werte besitzen, daß die Viskosität dieser Komponente a) einen Wert von 100 bis 100 000, vorzugsweise von 1000 bis 10 000 mPa sec bei 20 ° C besitzt,

b) ein cyclisches Organosiloxan oder ein Gemisch von cyclischen Organosiloxanen der Formel (II)

$[Si(R)_2\ O]_x$ (II)

worin x eine Zahl von 3 bis 8, vorzugsweise 3 oder 4 ist

c) ein Silan oder ein Gemisch von Silanen der Formel (III)

$$YX_2\,Si\!-\!(CHZ)_p\!- NH -\!\!\left[(CHZ)_w\!- NH\right]_q\!- H, \qquad (III)$$

worin p eine Zahl von 2 bis 6 und q eine Zahl von 0 bis 7, vorzugsweise 1 bis 3 ist, w eine Zahl von 2 bis 6 ist, und worin alle Reste X unabhängig voneinander für einen Rest

$$RO\!-\!(CHZ - CHZ - O)_t\!-$$

oder für einen Rest R oder für

$$HO -(CHZ - CHZ - O)_t\!-$$

stehen, worin t eine Zahl von 0 bis 8 ist, Z für H oder $CH_3$ steht und Y für X oder für

$$-(CHZ)_p - NH -\!\!\left[(CHZ)_w\!- NH\right]_q\!- H$$

steht,

d) einen Dispergator oder ein Gemisch von Dispergatoren, wobei vorzugsweise mindestens ein kationischer Dispergator anwesend ist und gegebenenfalls

e) ein Silan oder ein Gemisch von Silanen der Formel (IV)

$$\left[R'''O -(CHZ - CHZ - O)_t\!-\right]_2\!- SiX_2 \qquad (IV)$$

oder ein Produkt, das aus diesem Silan oder diesem Gemisch von Silanen in Gegenwart von Wasser durch Hydrolyse und nachfolgende Kondensation unter Wasserabspaltung entsteht
worin alle Reste X unabhängig voneinander sowie Z und t die oben genannten Bedeutungen besitzen und wobei R'''für H oder R steht,
mit der Maßgabe, daß die Zusammensetzung mindestens eine Komponente c) oder e) enthält, in der

mindestens ein Si-Atom vorliegt, an das drei oder vier Reste der Formel

$$RO-(CHZ-CHZ-O)_t-$$

oder der Formel

$$HO-(CHZ-CHZ-O)_t-$$

gebunden sind, wobei alle in den Komponenten a), b), c) und e) vorliegenden Reste R unabhängig voneinander Alkylreste mit 1 bis 4 C-Atomen oder Phenylreste sind, wobei die Zusammensetzung die Komponenten a), b), c) und ggf. e) entweder nur als solche oder zusätzlich dazu oder ausschließlich in Form von Produkten enthält, die durch teilweise oder vollständige Umsetzung von zwei oder mehr dieser Komponenten miteinander entstehen.

Die erfindungsgemäßen Zusammensetzungen weisen folgende Vorteile auf:

1. Sie eignen sich ausgezeichnet für die Beschichtung von Flächengebilden aus Fasermaterialien, wobei für den Beschichtungsprozeß im Normalfall die Zusammensetzungen noch übliche bekannte Verdikkungsmittel und gegebenenfalls weitere unten näher beschriebene Produkte enthalten.
Die beschichteten Flächengebilde wie z.B. non-wovens, insbesondere Gewebe und Maschenwaren, weisen nach Aushärtung (Vernetzung) der Beschichtung eine gute Wasserdichtheit bei guter Permanenz auf. Diese Flächengebilde eignen sich für die Verwendung in Bekleidungstextilien, Heimtextilien oder technischen Artikeln. Beispiele für Einsatzzwecke sind Planen, Zeitleinwände, Regenbekleidung, Duschvorhänge.

2. Bei Verwendung erfindungsgemäßer Zusammensetzungen für die Beschichtung von Fasermaterialien ist die Gefahr der Thermomigration von Dispersionsfarbstoffen deutlich niedriger als bei Verwendung bekannter Zusammensetzungen, welche Polyacrylate, Polyurethane, Polyvinylalkohole in größeren Mengen oder Copolymere mit größeren Anteilen von aus Acrylaten stammenden Einheiten oder von Urethaneinheiten enthalten. Die erfindungsgemäßen Zusammensetzungen enthalten aus diesem Grund vorzugsweise keine Polyacrylate, Polyurethane, Polyvinylalkohole sowie keine Copolymere mit größeren Anteilen an Acrylateinheiten oder Urethaneinheiten. Falls im Einzelfall aus speziellen Gründen in den erfindungsgemäßen Zusammensetzungen dennoch polymere Produkte mit Acrylat- oder Urethaneinheiten zusätzlich zu den Komponenten a) bis e) erwünscht sein sollten, so sollte deren Menge 10 Gewichts-%, bezogen auf die Summe an Komponenten a), b), c) und e) nicht überschreiten.

3. Die unter Verwendung erfindungsgemäßer Zusammensetzungen beschichteten Flächengebilde aus Fasermaterialien weisen gute Sprungelastizität und gute Kälteflexibilität auf. Insbesondere ihre Formstabilität und Formerholung nach mechanischer Belastung ist gegenüber den Formstabilitäten und Formerholungseigenschaften deutlich verbessert, die mit bekannten Zusammensetzungen auf Acrylat- oder Urethanbasis erzielt werden.

4. Gegenüber textilen Flächengebilden, die mit Zusammensetzungen auf Acrylatbasis beschichtet wurden, weisen Flächengebilde, welche unter Verwendung erfindungsgemäßer Zusammensetzungen beschichtet wurden, angenehm weichen Griff und keine oder deutlich niedrigere Klebrigkeit auf.

5. Erfindungsgemäße Zusammensetzungen lassen sich in Form stabiler wäßriger Dispersionen auch bei hohen Konzentrationen von bis zu 50 Gew.%, im Einzelfall auch bis zu 60 Gew.% erhalten; es ist kein Zusatz an organischem Lösungsmittel erforderlich, was zu Vorteilen bezüglich Kosten und Ökologie führt. Vorzugsweise sind erfindungsgemäße Zusammensetzungen daher völlig frei von organischen Lösungsmitteln oder enthalten organische Lösungsmittel nur in Mengen bis höchstens 5 Gew.%, bezogen auf die gesamte Zusammensetzung.

6. Erfindungsgemäße Zusammensetzungen, die in Form wäßriger Dispersionen vorliegen, sind mit Organopolysiloxanen (H-Siloxanen) kombinierbar, welche Silicium-Wasserstoff-Bindungen aufweisen, insbesondere wenn hierbei ein pH-Wert der H-Siloxan enthaltenden erfindungsgemäßen Zusammensetzung von 2 bis 5 eingehalten wird. Die zusätzliche Verwendung dieser, unten näher beschriebenen, H-Siloxane führt vielfach zu einer weiteren Erhöhung der Permanenz der Wasserdichtheit der Beschichtung nach Vernetzung. Unter der hier und weiter oben erwähnten Permanenz ist das Ausmaß der Beibehaltung der Wasserdichtheit nach 5 maligem Waschen des Fasermaterials bei 60 °C zu verstehen. Wegen der bekannten Reaktivität der Si-H-Bindung in wäßrigem Medium sind allerdings die H-Siloxan enthaltenden wäßrigen Dispersionen nur über eine begrenzte Zeit stabil, so daß zweckmäßigerweise das H-Siloxan den als wäßrige Dispersionen vorliegenden erfindungsgemäßen Zusammensetzungen erst kurze Zeit,

d.h. nicht mehr als einige Stunden vor dem Beschichtungsvorgang zugesetzt wird.

Erfindungsgemäße Zusammensetzungen sind wäßrige Dispersionen, welche mindestens je eine der oben genannten und nachfolgend näher beschriebenen Komponenten a), b), c) und d) enthalten. Die Zusammensetzungen können daneben auch noch eine Komponente e) der ebenfalls nachfolgend näher beschriebenen Art enthalten. Die Komponenten a), b), c) und gegebenenfalls e) können in den erfindungsgemäßen Zusammensetzungen als solche vorliegen, d.h. jeweils in Form eines Produkts der in den Formeln I, II, III und IV beschriebenen Struktur. Es können jedoch an Stelle der individuellen Komponenten oder zusätzlich dazu auch Produkte vorliegen, welche durch teilweise oder vollständige Umsetzung von zwei oder mehr der Komponenten a), b), c) und e) miteinander erhalten werden. Die erfindungsgemäßen Zusammensetzungen müssen aber jede der Komponenten a), b), c) enthalten, entweder als individuelle Substanz oder in Form eines Umsetzungsprodukts, das aus dieser Komponente und einer oder mehreren der anderen Komponenten a), b), c) oder e) gebildet wird. Daneben müssen die erfindungsgemäßen Zusammensetzungen noch Komponente d), diese jedoch nicht in Form eines Umsetzungsprodukts, enthalten.

Die Umsetzungsprodukte von zwei oder mehr der Komponenten a), b), c) und e) untereinander, die zusätzlich oder an Stelle der individuellen Komponenten in den erfindungsgemäßen Zusammensetzungen anwesend sein können, können entweder bewußt bei der Herstellung der Zusammensetzungen verwendet werden. Dies kann dadurch geschehen, daß man zwei oder mehr der Komponenten a), b), c) und e) teilweise oder vollständig miteinander umsetzt und das so erhaltene Reaktionsprodukt bei der Herstellung einer erfindungsgemäßen Zusammensetzung verwendet. Solche Produkte aus teilweiser oder vollständiger Umsetzung können sich jedoch auch von selbst in erfindungsgemäßen Zusammensetzungen bilden, die unter Verwendung der nicht miteinander umgesetzten individuellen Komponenten a), b), c) und gegebenenfalls e) hergestellt werden. Eine solche Umsetzung nach Herstellung einer erfindungsgemäßen Zusammensetzung in Form einer wäßrigen Dispersion kann insbesondere von dem Zeitpunkt an erfolgen, an dem der Dispersion ein Vernetzungskatalysator zugesetzt wird. Ist eine solche Umsetzung vor Herstellung der erfindungsgemäßen Zusammensetzung erwünscht, so handelt es sich hierbei vorzugsweise um eine teilweise Umsetzung von zwei oder drei der Komponenten b), c) und e) untereinander. Teilweise Umsetzung bedeutet in diesem Zusammenhang, daß bis zu 50 % der theoretisch möglichen Menge an Umsetzungsprodukten gebildet worden sind. Es ist auch möglich, daß erfindungsgemäße Zusammensetzungen Produkte enthalten, welche durch Umsetzung einer Verbindung der Formel (I) (Komponente a)) mit einer Verbindung der Formel (III) (Komponente c)) oder mit einer Verbindung der Formel (IV) (Komponente e)) entstehen.

Die Komponente a):

Hierbei handelt es sich um ein Organopolysiloxan der oben genannten Formel (I) mit einer verzweigten oder unverzweigten Polysiloxankette, welche an mindestens zwei endständigen Si-Atomen jeweils eine Hydroxygruppe oder eine Gruppe OR aufweist. Alle in Formel (I) angegebenen Reste R sind unabhängig voneinander jeweils Alkylreste mit 1 bis 4 Kohlenstoffatomen oder Phenylreste. Bevorzugt sind alle Reste R Methyl- oder Ethylreste, wobei Methylresten aus Kostengründen gegenüber Ethylresten der Vorzug zu geben ist. Die Aussage, wonach Methylreste oder Ethylreste als Reste R bevorzugt sind, gilt nicht nur für Komponente a) sondern auch für die Komponenten b), c) und e).

In der für Komponente a) angegebenen Formel (I) stehen alle Reste R' unabhängig voneinander für einen Rest R oder für einen Rest der Formel

$$-\!\!\left[ O - Si(R)_2 \right]_{n2}\!\! - OSi(R)_2 R''$$

Bevorzugt stehen alle außer einem oder alle der Reste R' für einen Rest R. Im letzteren Fall ist die Komponente a) eine Verbindung oder ein Gemisch von Verbindungen mit einer unverzweigten Polysiloxankette.

An alle endständigen Siliciumatome der Verbindungen der Formel (I) sind zwei Reste R gebunden, wobei alle Reste R unabhängig voneinander die oben angegebene Bedeutung besitzen. Ferner ist an jedes endständige Siliciumatom ein Rest R'' gebunden. Alle anwesenden Reste R'' stehen unabhängig voneinander für einen Rest R, für OH oder für OR. Mindestens zwei der Reste R'' müssen jedoch für OH oder OR stehen, wobei R wiederum die genannte Bedeutung besitzt, insbesondere für $CH_3$ oder $C_2H_5$ steht. Die beiden Reste R'', die für OH oder OR stehen müssen, können gleich oder verschieden sein, es kann beispielsweise einer dieser Reste für OH und der andere für OR, insbesondere für $OCH_3$ oder $OCH_2CH_3$

stehen. Die Forderung, daß mindestens zwei der Reste R" für OH oder OR stehen müssen, resultiert aus der Tatsache, daß diese Bifunktionalität für die spätere Vernetzung erforderlich ist, wobei OH-Gruppen direkt zur Vernetzung befähigt sind und OR-Gruppen nach Hydrolyse im wäßrigen Medium.

Die Länge der verzweigten oder unverzweigten Polysiloxankette in Komponente a), die durch die Werte von n1 und n2 bestimmt wird, muß so gewählt werden, daß die Komponente a) bei 20 °C eine Viskosität im Bereich von 100 bis 100 000 mPa sec besitzt. Besonders günstige Ergebnisse bezüglich Handhabung und Verwendung der Dispersionen bzw. Eigenschaften der beschichteten Fasermaterialien erhält man, wenn n1 und n2 so gewählt werden, daß die Viskosität im Bereich von 1000 bis 10 000 mPa sec liegt. An Stelle eines einzigen Organopolysiloxans kann Komponente a) auch ein Gemisch von Organopolysiloxanen sein, die alle unter Formel (I) fallen und die oben genannten Bedingungen erfüllen.

Wenn Komponente a) eine Viskosität im genannten Bereich aufweist, können die individuellen Werte von n1 und n2 frei gewählt werden, z.B. kann n2 auch 0 sein, n1 muß jedoch für eine Zahl von 1 oder größer als 1 stehen.

Als Komponente a) geeignete Polysiloxane sind dem Fachmann aus dem Stand der Technik bekannt, z.B. aus der DE-Patentschrift 30 35 824, der DE-Auslegungsschrift 24 59 936 und der EP-A 515 915. Geeignete Vertreter solcher Produkte sind im Handel erhältlich, Beispiele sind die Produkte Baysilone Öl T 5 (Hersteller: Bayer AG, Deutschland) und Silikonöl CT 5000 M (Hersteller: Firma Wacker GmbH, Deutschland).

Die Komponente b):

Komponente b) ist ein cyclisches Organosiloxan oder ein Gemisch von cyclischen Organosiloxanen der oben genannten Formel (II). In dieser Formel haben alle anwesenden Reste R die oben angegebene Bedeutung, wobei bevorzugt alle Reste R Methylreste sind. Die Zahl x, welche die Anzahl der Si-Atome im Siloxanring angibt, besitzt einen Wert von 3 bis 8. Bevorzugt besitzt x den Wert 3 oder 4; bevorzugte Vertreter der Komponente b) sind Octamethylcyclotetrasiloxan oder Hexamethylcyclotrisiloxan oder ein Gemisch aus diesen beiden Verbindungen.

Die unter Formel (II) fallenden Produkte sind dem Fachmann seit langem bekannt und im Handel erhältlich. Geeignete Handelsprodukte können neben cyclischen Siloxanen auch noch offenkettige Oligosiloxane als Nebenprodukte enthalten. Diese offenkettigen Oligosiloxane können daher auch in erfindungsgemäßen Zusammensetzungen als Nebenprodukte anwesend sein.

Die Komponente c):

Komponente c) ist ein Silan oder ein Gemisch von Silanen der oben angegebenen Formel (III). Alle als Komponente c) geeigneten Silane enthalten einen oder zwei (wenn Y nicht für X steht) an das Siliciumatom gebundenen Substituenten, der eine primäre Aminogruppe aufweist. Daneben können in diesem Substituenten noch eine oder mehrere sekundäre Aminogruppen vorliegen (q besitzt in Formel (III) einen Wert von 0 bis 7). Bevorzugt enthält jeder an das Si-Atom gebundene aminofunktionelle Substituent eine, zwei oder drei sekundäre Aminogruppen, d.h. q besitzt vorzugsweise einen Wert von 1 bis 3. Die Anzahl p der zwischen dem Si-Atom und der ersten Aminogruppe vorhandenen Gruppen der Formel CHZ beträgt 2 bis 6, vorzugsweise 2 bis 3. Jeder der anwesenden Reste Z steht hierbei jeweils für Wasserstoff oder eine Methylgruppe, bevorzugt stehen alle Reste Z für Wasserstoff. Komponente c) enthält einen oder zwei an das Si-Atom gebundene Reste der Formel

$$-(CHZ)_p-NH-[(CHZ)_w-NH]_q-H,$$

nämlich einen solchen Rest, wenn in Formel (III) Y für X steht und zwei, wenn Y nicht für X steht. In dieser Formel besitzen alle anwesenden Reste Z unabhängig voneinander die oben genannte Bedeutung, w steht für eine Zahl von 2 bis 6, vorzugsweise für die Zahl 2 und q steht für eine Zahl von 0 bis 7, vorzugsweise von 1 bis 3.

Neben einem oder zwei, jeweils eine oder mehrere Aminogruppen aufweisenden Substituenten sind an das Si-Atom von Komponente c) noch zwei oder drei Reste X gebunden. Diese können gleich oder voneinander verschieden sein. Zwei Reste X liegen in Komponente c) vor, wenn der an das Si-Atom gebundene Rest Y nicht für X steht, drei Reste X sind an das Si-Atom gebunden, wenn Y für X steht Jeder Substituent X ist entweder ein Rest R der oben im Zusammenhang mit Komponente a) beschriebenen Art, vorzugsweise jedoch ein Rest der Formel

$$RO\text{-}(CHZ - CHZ - O)_t\text{-}$$

oder der Formel

$$HO\text{-}(CHZ - CHZ - O)_t\text{-} ,$$

worin R wiederum die genannte Bedeutung besitzt, Z für H oder $CH_3$, vorzugsweise H, steht und t für eine Zahl von 0 bis 8 steht. Als Reste R sind wiederum Methylreste oder Ethylreste bevorzugt. Wenn X für R steht, ist insbesondere eine Methylgruppe als Rest R bevorzugt, wenn X für

$$RO\text{-}(CHZ\ CHZ\ O)_t\text{-}$$

steht, ist R bevorzugt eine Ethylgruppe.

Der neben zwei Resten X und dem beschriebenen aminofunktionellen Rest an das Siliciumatom von Komponente c) gebundene Rest Y steht vorzugsweise für einen Rest X, wobei X die oben genannte Bedeutung besitzt. Y kann jedoch auch für einen aminofunktionellen Substituenten der bereits beschriebenen Art stehen, nämlich für

$$\text{-}(CHZ)_p\text{-}NH\text{-}[(CHZ)_w\text{-}NH]_q\text{-}H.$$

Geeignete aminofunktionelle Silane, welche als Komponente c) verwendet werden können, sind dem Fachmann bekannt. Als Komponente c) einsetzbare Produkte sind auf dem Markt erhältlich, z.B. Dynasylan® 1411, Dynasylan® 1505 und Dynasylan® TRIAMO der Fa. Hüls AG, Marl, Deutschland.

Wenn die erfindungsgemäßen Zusammensetzungen keine Komponente e) der unten näher beschriebenen Art enthalten, muß eine Komponente c) anwesend sein, in welcher Y für X steht und in welcher alle 3 anwesenden Reste X jeweils für einen Rest der Formel

$$RO\text{-}(CHZ\ CHZ\ O)_t\text{-}$$

oder der Formel

$$HO\text{-}(CHZ - CHZ - O)_t\text{-}$$

stehen. Das Gleiche gilt, wenn zwar eine Komponente e) anwesend ist, diese aber weniger als drei Reste der Formel

$$RO\text{-}(CHZ\ CHZ\ O)_t\text{-}$$

oder der Formel

$$HO\text{-}(CHZ - CHZ - O)_t\text{-}$$

aufweist. Wenn eine Komponente e) mit drei oder vier Resten der Formel

$$RO\text{-}(CHZ\ CHZ\ O)_t\text{-}$$

oder der Formel

$$HO\!\left(CHZ - CHZ - O\right)_t\!-$$

anwesend ist, können dagegen in Komponente c) weniger als drei Reste der Formel

$$RO\!\left(CHZ\ CHZ\ O\right)_t\!-$$

oder der Formel

$$HO\!\left(CHZ - CHZ - O\right)_t\!-$$

anwesend sein. Die Forderung, wonach mindestens ein Silan mit drei oder vier Resten der Formel

$$RO\!\left(CHZ\ CHZ\ O\right)_t\!-$$

oder der Formel

$$HO\!\left(CHZ - CHZ - O\right)_t\!-$$

anwesend sein muß, hängt damit zusammen, daß nur in diesem Fall eine ausreichende Vernetzung der Beschichtung auf den Fasermaterialien und daher nur in diesem Fall eine ausreichend wasserdichte Beschichtung mit guter Permanenz erzielt wird.

Die Komponente d):

Komponente d) der erfindungsgemäßen Zusammensetzungen ist ein Dispergator. Es kann auch ein Gemisch unterschiedlicher Dispergatoren verwendet werden. Die Anwesenheit eines oder mehrerer Dispergatoren ist erforderlich, damit die erfindungsgemäßen Zusammensetzungen stabile wäßrige Dispersionen darstellen. Vorzugsweise ist mindestens einer der verwendeten Dispergatoren kationaktiv. Hierfür sind Produkte einsetzbar, die dem Fachmann als geeignet für die Herstellung stabiler wäßriger Dispersionen bekannt sind, z.B. quaternierte Ammoniumsalze, z.B. quaternierte Fettamine, quaternierte Salze von Fettsäureamiden oder Fettsäurealkanolamiden, die außer Amido- auch Aminogruppen enthalten. Die entsprechenden Anionen dieser Salze sind bevorzugt $Cl^-$, $CH_3SO_4^-$, $SO_4^{2-}$, Phosphat-, Phosphonat- oder Acetatanionen. An Stelle oder neben einem oder mehreren kationaktiven Dispergatoren können die erfindungsgemäßen Zusammensetzungen noch einen oder mehrere nichtionogene Dispergatoren enthalten. Hierfür geeignet sind beispielsweise allgemein bekannte Vertreter der Verbindungsklassen ethoxilierte Fettalkohole, ethoxilierte Fettamine und ethoxilierte Fettsäuren, z.B. solche mit 8 bis 18 Kohlenstoffatomen im Fettalkohol-, Fettamin- bzw. Fettsäurerest und 2 bis 40 Polyoxyethyleneinheiten. Auch ethoxilierte Polyamine wie ethoxilierte Stearyldiethylentriamine mit 2 bis 40 Polyoxyethyleneinheiten können verwendet werden.

Die Komponente e):

Komponente e) ist ein Silan oder ein Gemisch von Silanen der oben angegebenen Formel (IV), d.h. der Formel

$$[R''' - O\!\left(CHZ\ CHZ - O\right)_t]_2\ SiX_2.$$

In dieser Formel steht R''' für H oder R und die beiden Reste X stehen unabhängig voneinander jeweils für einen Rest R oder für

$$R''' - O\left(CHZ\ CHZ\ O\right)_t\!-,$$

die Reste R stehen unabhängig voneinander jeweils für einen Alkylrest mit 1 bis 4 C-Atomen oder einen Phenylrest, t ist eine Zahl von 0 bis 8. Wenn X für R steht, ist dieser Rest R bevorzugt ein Methyl- oder Ethylrest, wobei insbesondere der Methylrest bevorzugt ist. Wenn R''' für R steht, ist dieser Rest R ebenfalls bevorzugt ein Methyl- oder Ethylrest. Wenn die oben beschriebene Komponente c) einer erfindungsgemäßen Zusammensetzung kein Silan der Formel (III) enthält, in der Y für X steht und in der alle drei anwesenden Reste X für

$$RO(CHZ\ CHZ\ O)_t$$

oder für

$$HO(CHZ - CHZ - O)_t-$$

stehen, so muß diese Zusammensetzung eine Komponente e) enthalten, und diese Komponente e) muß ein Silan enthalten, in dem drei oder vier Reste der Formel

$$RO(CHZ - CHZ - O)_t-$$

oder der Formel

$$HO(CHZ- CHZ- O)_t-$$

an das Si-Atom gebunden sind. Ist dagegen in Komponente c) ein Silan der Formel (III) enthalten, in dem drei Reste X anwesend sind und für

$$RO(CHZ\ CHZ\ O)_t$$

oder für

$$HO(CHZ - CHZ - O)_t-$$

stehen, so kann zusätzlich eine Komponente e) anwesend sein, aber sie muß nicht anwesend sein. Ferner kann in diesem Fall eine Komponente e) vorliegen, in der nur zwei Reste der Formel

$$R'''\ O(CHZ\ CHZ\ O)_t-$$

an das Si-Atom gebunden sind, während die beiden Reste X jeweils für einen Rest R stehen.
Als Komponente e) geeignete Produkte sind z.B. Triethoxymethylsilan, Triethoxyethylsilan, Dimethoxydimethylsilan, Dimethoxydiethylsilan, Diethoxydimethyl- oder -diethylsilan. Werterhin geeignet ist das auf dem Markt erhältliche Tetraethoxysilan.

An Stelle eines Silans oder Gemischs von Silanen der Formel (IV) als solches oder zusätzlich dazu kann als Komponente e) auch ein Produkt oder Produktgemisch verwendet werden, das aus einem Silan oder einem Gemisch von Silanen der Formel (IV) in Gegenwart von Wasser durch Hydrolyse und nachfolgende Kondensation unter Wasserabspaltung entsteht. In Gegenwart von Wasser können aus Silanen der Formel (IV) durch Hydrolyse zuerst Produkte mit drei oder vier Si-OH-Bindungen entstehen, die unter Wasserabspaltung (Kondensation) zu vernetzten Siloxanstrukturen weiterreagieren können. Derartige Produkte sind z.B. als Polyethoxysiloxane auf dem Markt erhältlich.

Die erfindungsgemäßen Zusammensetzungen enthalten die Komponenten a) bis e) vorzugsweise in folgenden relativen Mengenverhältnissen zueinander, wobei die nachfolgenden Angaben jeweils auf wasserfreie Produkte bezogen sind.

a) 10 bis 70 Gew.teile, vorzugsweise 40 bis 70 Gew.teile

b) 10 bis 70 Gew..teile, vorzugsweise 25 bis 60 Gew.teile
c) 0,1 bis 10 Gew.teile, vorzugsweise 0,2 bis 3 Gew.teile
d) 0,1 bis 10 Gew. teile, vorzugsweise 0,5 bis 3 Gew.teile
e) 0 bis 10 Gew.teile.

Das Gewichtsverhältnis Wasser zur Summe der Komponenten a), b), c) und e) beträgt bevorzugt 2 : 1 bis 1 : 1. Die Menge an Komponente d) (Dispergator bzw. Dispergatorgemisch) beträgt bevorzugt 0,5 bis 3 Gew.%, bezogen auf Gesamtdispersion. Ferner ist es bevorzugt, wenn die Summe der Komponenten a), b), c) und e) den weitaus überwiegenden Bestandteil der erfindungsgemäßen Zusammensetzungen außer Wasser darstellt, insbesondere, wenn diese Summe 75 bis 95 Gew.% aller in der Dispersion außer Wasser anwesenden Bestandteile bildet. Die übrigen, vorzugsweise insgesamt in Mengen bis höchstens 25 Gew.% anwesenden Bestandteile sind Komponente d) (Dispergator) und gegebenenfalls weitere Bestandteile, welche nachfolgend beschrieben werden.

Für die Beschichtung von Flächengebilden aus Fasermaterialien wird den wäßrigen Dispersionen, welche die Komponenten a), b), c) d) und gegebenenfalls e) enthalten, im Normalfall ein Verdickungsmittel zugesetzt, da wäßrige Dispersionen mit geringer Viskosität sich nicht für Beschichtungszwecke eignen. Nach Zusatz des Verdickungsmittels entstehen hochviskose bis pastenförmige Produkte, mit denen textile Flächengebilde beschichtet werden können, z.B. über Rakeln. Diese hochviskosen Produkte oder Pasten sind ebenfalls wäßrige Dispersionen im Sinne der Erfindung. Die Bezeichnung "wäßrige Dispersion" für die erfindungsgemäßen Zusammensetzungen umfaßt also nicht nur flüssige oder fließfähige Produkte.
Als Verdickungsmittel für Beschichtungsverfahren geeignete Produkte sind dem Fachmann bekannt. Alle üblichen Verdickungsmittel können prinzipiell Bestandteile erfindungsgemäßer Zusammensetzungen sein, vorausgesetzt, sie führen nicht zu einer Trennung der Bestandteile der Zusammensetzung und damit zu deren Inhomogenität. Besonders geeignet als Verdickungsmittel ist Hydroxyethylcellulose. Die Menge an Verdickungsmittel, die zweckmäßigerweise zugesetzt wird, kann variieren, für den Fachmann sind nur wenige Routineversuche nötig, um die optimale Menge zu ermitteln, die im Normalfall in der Größenordnung von 0,1 bis 3 Gew.%, bezogen auf Gesamtzusammensetzung, liegt.

Um gute Vernetzung der Komponenten a), b), c) und gegebenenfalls e) auf den Fasermaterialien zu erzielen und damit wasserdichte Filme zu erhalten, enthalten die erfindungsgemäßen Zusammensetzungen vorzugsweise einen oder mehrere Vernetzungskatalysatoren. Geeignete Vernetzungskatalysatoren sind dem Fachmann aus der Silikonchemie bekannt. Metallsalze organischer Carbonsäuren, insbesondere Zinnsalze wie Dialkylzinn (IV)-salze sind geeignet. Der Zusatz des Vernetzungskatalysators kann entweder erst kurz vor dem Beschichten der Fasermaterialien erfolgen, man kann jedoch auch bereits bei der Herstellung erfindungsgemäßer Zusammensetzungen Vernetzungskatalysatoren zusetzen. In diesem Fall kann bereits in der wäßrigen Dispersion eine teilweise Vorvernetzung von zwei oder mehr der Komponenten a), b), c) und gegebenenfalls e) erfolgen. In einigen Fällen kann diese Vorvernetzung wegen Erhöhung der Viskosität wünschenswert sein und bewußt herbeigeführt werden.

Außer den bereits erwähnten Zusätzen können die erfindungsgemäßen Zusammensetzungen noch Produkte enthalten, welche eine Verbesserung der Haftung der vernetzten polymeren Siliciumverbindungen (die aus den Komponenten a), b), c) und gegebenenfalls e) entstehen) an den Fasermaterialien bewirken.
Darüber hinaus können in den erfindungsgemäßen Zusammensetzungen Produkte enthalten sein, welche einen Schutz vor korrodierenden Eigenschaften bewirken, wie z.B. Phosphorsäure bzw. deren Salze, und Produkte, welche zur Einstellung des gewünschten pH-Werts dienen, wie z.B. Essigsäure, Oxalsäure oder Natriumhydroxid.

Jeder der oben erwähnten Zusätze ist vorzugsweise in Mengen von weniger als 10 Gew.%, bezogen auf Gesamtzusammensetzung, anwesend. Die Menge an Verdickungsmittel beträgt vorzugsweise 0,1 bis 3 Gew.%, die Menge an Vernetzungskatalysator vorzugsweise 0,3 bis 1,0 Gew.%, die Menge an Haftverbesserungsmittel vorzugsweise 0,5 bis 8 Gew.%, die Mengen an Korrosionsschutzmittel und an Produkt zur Einstellung des pH-Werts vorzugsweise jeweils 0,3 bis 1 Gew.%. Alle diese Mengenangaben beziehen sich auf Gesamtzusammensetzung.

Der pH-Wert erfindungsgemäßer Zusammensetzungen liegt vorzugsweise im Bereich von 3,0 bis 9,0 bei 20 °C. Dieser Bereich ist jedoch nur dann bevorzugt, wenn eine erfindungsgemäße Zusammensetzung kein Produkt enthält, das Silicium-Wasserstoff-Bindungen aufweist. Wenn dagegen ein solches Produkt, wie unten näher beschrieben, enthalten ist, so beträgt in diesem Fall der pH-Wert vorzugsweise 2,0 bis 5,0 bei 20 °C. Der Grund hierfür liegt darin, daß in diesem Bereich die Si-H-Bindungen chemisch stabiler sind als in anderen pH-Bereichen.

Die Herstellung erfindungsgemäßer Zusammensetzungen kann nach bekannten, dem Fachmann geläufigen Methoden erfolgen. Es kann z.B. Wasser vorgelegt werden, zu dem man die Komponenten a) bis d) bzw. a) bis e) und gegebenenfalls weitere Produkte in beliebiger Reihenfolge hinzugibt. Es kann auch eine

Mischung von Wasser und Dispergator oder Dispergatorgemisch vorgelegt werden, zu der unter Rühren die Komponenten a), b), c) und gegebenenfalls e) hinzugefügt werden. Eine Homogenisierung, die zu stabilen wäßrigen Dispersionen führt, kann bei Raumtemperatur oder erhöhter Temperatur und gegebenenfalls unter erhöhtem Druck in bekannten Apparaturen erfolgen.

In einer bevorzugten Ausführungsform stellt man zuerst getrennt voneinander zwei wäßrige Dispersionen A und B her und vereinigt diese Dispersionen dann, um eine erfindungsgemäße Zusammensetzung zu erhalten. Der so erhaltenen Zusammensetzung kann anschließend ein Verdickungsmittel und gegebenenfalls weitere Produkte zugesetzt werden, um eine Zusammensetzung, z.B. in Form einer Paste, zu erhalten, mit der Fasermaterialien beschichtet werden können. Die erwähnte getrennte Herstellung zweier Dispersionen A und B ist in einer Reihe von Fällen von Vorteil, weil sie zu einer erhöhten Stabilität der nach Vereinigung von A und B erhaltenen erfindungsgemäßen Zusammensetzung führen kann. Wählt man diese Methode der getrennten Herstellung einer Dispersion A und einer Dispersion B, so enthält Dispersion A Wasser, einen oder mehrere Dispergatoren und Komponente a). Sie enthält dagegen die Komponenten b), c) und e) nicht oder nur in unwesentlichen Mengen. Unter unwesentlichen Mengen an Komponenten b), c) und e) ist hierbei zu verstehen, daß jede dieser Komponenten höchstens in solchen Mengen anwesend ist, daß höchstens 20 % der Menge an Komponente a) mit Komponente b), c) oder e) oder dem Gemisch dieser Komponenten reagieren kann. Es sollen also mindestens 80 %, vorzugsweise 90 bis 100 % der Gesamtmenge an Komponente a), die in Dispersion A vorliegt, erst nach Vereinigung von Dispersion A mit Dispersion B chemisch mit den in Dispersion B anwesenden Komponenten b), c) und gegebenenfalls e) reagieren können. Dispersion B enthält Wasser, einen oder mehrere Dispergatoren und die Komponenten b), c) und gegebenenfalls e). Die Komponente a) dagegen ist in Dispersion B nicht oder nur in unwesentlichen Mengen enthalten. Die Aussage "unwesentliche Mengen" bedeutet analog zu den obigen Angaben, daß höchstens 20 %, vorzugsweise 0 bis 10 % der Summe an Komponenten b), c) und e) mit der in Dispersion B anwesenden Komponente a) reagieren können. An Stelle der Komponenten b), c) und e) als solche oder zusätzlich zu diesen kann jedoch die Dispersion B auch Produkte enthalten, die durch Reaktion von zwei oder drei dieser Komponenten untereinander gebildet werden. Dies kann insbesondere der Fall sein, wenn die Dispersion B einen Vernetzungskatalysator enthält.

Der in Dispersion A enthaltene Dispergator kann der gleiche sein wie der in Dispersion B enthaltene, er kann sich aber auch von diesem unterscheiden. Dies gilt auch für den Fall, daß ein Gemisch von Dispergatoren verwendet wird.

Die erfindungsgemäßen Zusammensetzungen besitzen gute Lagerstabilität und eignen sich ausgezeichnet für die Beschichtung von Flächengebilden aus Fasermaterialien. Bevorzugte Fasermaterialien sind nonwovens (Vliese) und insbesondere Gewebe oder Maschenwaren. Besonders gute Ergebnisse werden bei Beschichtung von Flächengebilden aus Fasermaterialien erhalten, welche aus natürlichen, teilsynthetischen oder vollsynthetischen organischen Polymeren bestehen. Auch Mischungen von Fasern aus diesen Polymeren können verwendet werden. Falls natürliche Polymere verwendet werden sollen, kommen unter anderem Artikel aus Leinen und Cellulose, z.B. Baumwolle in Frage. Geeignete Flächengebilde aus teilsynthetischen Polymeren sind Artikel aus regenerierter Cellulose, als vollsynthetische Polymere kommen beispielsweise Polyester oder Polyamide in Frage.

Die Beschichtung der Flächengebilde aus Fasermaterialien kann nach allgemein bekannten Methoden erfolgen, beispielsweise über Rakeln. Hierzu werden die erfindungsgemäßen Zusammensetzungen im Normalfall in Form wäßriger Dispersionen verwendet, welche ein Verdickungsmittel enthalten und als pastöse Produkte vorliegen.

In einer bevorzugten Ausführungsform des Verfahrens der Beschichtung von Fasermaterialien unter Verwendung erfindungsgemäßer Zusammensetzungen wird auf die Fasermaterialien zusätzlich zu der erfindungsgemäßen Zusammensetzung noch ein Organopolysiloxan aufgebracht, das zwei oder mehr an je ein Siliciumatom gebundene Wasserstoffatome, also zwei oder mehr Si-H-Bindungen aufweist. Diese auch als H-Siloxane bezeichneten Organopolysiloxane können der Beschichtung erhöhte Permanenz nach Waschprozessen verleihen. Mindestens zwei Si-H-Bindungen sind erwünscht, um gute Vernetzung dieser H-Siloxane mit den Komponenten a), b), c) und gegebenenfalls e) zu erzielen. Geeignete H-Siloxane sind bekannte Produkte mit linearer Polysiloxankette, in der an zwei oder mehr Si-Atome jeweils ein Wasserstoffatom gebunden ist. Insbesondere bevorzugt sind Produkte der Formel

$$(CH_3)_3\,Si - O \left[ Si\,(CH_3)\,(E) - O \right]_r Si\,(CH_3)_3,$$

in der zwei oder mehr der Reste E für Wasserstoff und alle übrigen Reste E für $CH_3$ stehen. Vorzugsweise stehen nicht mehr als 20 % aller Reste E für $CH_3$. Der Wert von r liegt bevorzugt im Bereich von 20 bis 60,

kann jedoch auch größer oder kleiner sein. Geeignete H-Siloxane sind handelsübliche Produkte, z.B. das Produkt Baysilon® MH 15 (Hersteller: Firma Bayer AG, Deutschland).

Das H-Siloxan kann direkt den erfindungsgemäßen Zusammensetzungen hinzugefügt werden. In diesem Fall liegt der pH Wert der Zusammensetzung bevorzugt im Bereich von 2,0 bis 5,0, da in diesem Bereich die chemisch reaktive Si-H-Bindung die größte Stabilität aufweist. Wegen der Reaktivität der Si-H-Bindung, die zur Instabilität der wäßrigen Dispersion und Gasentwicklung bei Lagerung führen kann und wegen der Hydrolyse der Si-H-Bindung ist es empfehlenswert, das H-Siloxan der erfindungsgemäßen Zusammensetzung erst relativ kurze Zeit vor Durchführung des Beschichtungsverfahrens zuzusetzen. Diese kurze Zeit liegt zwischen einigen Minuten bis zu 10 Stunden.

Das H-Siloxan kann jedoch auch in einem separaten Arbeitsgang vor oder nach Durchführung des Beschichtungsverfahrens auf die Fasermaterialien aufgebracht werden. Das Aufbringen des H-Siloxans erfolgt in diesem Fall vorzugsweise durch einen Foulard-Prozeß. Hierfür wird das H-Siloxan beispielsweise in Form einer wäßrigen Dispersion mit schwach saurem pH-Wert von 2 bis 5 eingesetzt. Diese Dispersion kann als Dispergator ein kationaktives oder nichtionogenes oberflächenaktives Produkt der oben genannten Art enthalten. Solche Dispersionen sind handelsübliche Produkte.

Unabhängig davon, ob das H-Siloxan vor oder nach oder gleichzeitig mit einer erfindungsgemäßen Zusmmensetzung auf die Fasermaterialien aufgebracht wird, verwendet man zweckmäßigerweise 1 bis 5 Gew.teile H-Siloxan pro 100 Gew.teile an Summe der Komponenten a), b), c), und e). Diese Zahlen beziehen sich jeweils auf wasserfreie Produkte.

Zum Zweck der Vernetzung der Komponenten a), b), c) und gegebenenfalls e) und H-Siloxan miteinander werden die beschichteten Flächengebilde aus Fasermaterialien einer Trocknung und thermischen Behandlung unterzogen. Trocknung und thermische Behandlung, wobei letztere der vollständigen Durchführung der Vernetzung dient, können gleichzeitig oder nacheinander erfolgen. Die thermische Behandlung erfolgt bevorzugt in einem Temperaturbereich von 110 bis 180 °C während einer Zeit von 1 bis 5 Minuten. Die Einstellung von Temperatur und Behandlungszeit richtet sich unter anderem nach dem verwendeten Beschichtungssystem. Für den Fall, daß nach dem Beschichten mit einer erfindungsgemäßen Zusammensetzung in einem getrennten Arbeitsgang noch ein H-Siloxan auf die Fasermaterialien aufgebracht wird, empfiehlt es sich, die thermische Behandlung, bei der vollständige Vernetzung stattfindet, erst nach dem Aufbringen des H-Siloxans durchzuführen.

Die Fasermaterialien können, wenn gewünscht, vor dem Aufbringen erfindungsgemäßer Zusammensetzungen nach bekannten Methoden vorbehandelt werden; beispielsweise können hierbei über Foulard-Prozesse Produkte auf die Fasermaterialien aufgebracht werden, welche für die Behandlung von Fasermaterialien üblich sind.

Die Erfindung wird nunmehr durch Ausführungsbeispiele veranschaulicht.

Beispiel 1: Herstellung einer wäßrigen Dispersion A

Zu einer wäßrigen Lösung, welche 19 g eines ethoxilierten Amins und 13 g des aus diesem Amin nach Quaternisierung mit Dimethylsulfat entstehenden kationischen Salzes und 52 g Wasser enthielt, wurden 2600 g Baysilone® - Öl T 5 langsam und unter Kneten mittels einer Schnecke bei Raumtemperatur zugegeben. Das verwendete ethoxilierte Amin war ein Produkt, das aus einem Gemisch technischer Amine der Formel

$R - NH - CH_2 CH_2 - NH - CH_2 CH_2 - NH_2$

nach Ethoxilierung mit durchschnittlich 18 Mol Ethylenoxid pro Mol Amin entsteht. Der Rest R war ein gesättigter Fettsäurerest mit durchschnittlich 18 C-Atomen. Das Produkt Baysilone® Öl T 5 entspricht der beschriebenen Komponente a) und ist ein unverzweigtes $\alpha$, $\omega$-Dihydroxypolydimethylsiloxan mit einer Viskosität von ca. 5000 mPa sec bei 20 °C.
Man erhielt eine Paste, zu der unter Homogenisierung langsam 1,5 l Wasser zugetropft wurden. Es resultierte eine milchige Dispersion, die etwa 37 Gew.% Wasser enthielt.

Beispiel 2: Herstellung einer Dispersion B

Zu einer Lösung von 271 g Ethoquad® C 12 (Hersteller: Firma AKZO-Chemie, DE) in 10,14 l Wasser wurden 6150 g Silikonöl Z 020 (Octamethylcyclotetrasiloxan, Firma Wacker GmbH, DE) und
128 g Tetraethoxysilan gegeben, anschließend wurde homogenisiert. Es schloß sich eine Hochdruckhomogenisierung bei ca. 60 °C an. Ethoquad® C 12 ist ein quaternisiertes ethoxiliertes Fettamin (Dispergator).

Anschließend wurden 308 g Dynasylan® TRIAMO (Komponente c)) unter Rühren zugegeben. Das erhaltene Gemisch wurde 24 Stunden auf 90 °C erwärmt. Es resultierte eine milchige Dispersion, die ca. 61 Gew.% Wasser enthielt.

Beispiel 3: Herstellung einer erfindungsgemäßen Zusammensetzung

Je 232,5 g der nach Beispiel 1 und 2 hergestellten Dispersionen wurden miteinander bei Raumtemperatur gemischt. Zu der erhaltenen stabilen wäßrigen Dispersion wurden unter Rühren 20,5 g wäßrige 10 Gew.%ige Hydroxyethylcellulose gegeben. Anschließend wurde noch ca. 3 Stunden gerührt. Zu der erhaltenen Zusammensetzung gab man unter Rühren 2,8 g 40 Gew.%ige wäßrige Phosphorsäure und rührte noch einige Minuten weiter.

Beispiel 4: Herstellung von Zusammensetzungen für Beschichtungsversuche

Es wurden die Formulierungen 4 a bis 4 h mit folgenden Zusammensetzungen hergestellt:

Formulierung 4 a (erfindungsgemäß):

100 Gew.teile Dispersion nach Beispiel 3
4 Gew.teile einer ca. 20 Gew.%igen wäßrigen Dispersion (kationischer Dispergator) von Dioctyl-zinn (IV)-dilaurat,
1 Gew.teil eines 50 : 50 Gemisches aus Isopropanol und Dicrylan®-Verdicker O (Firma Pfersee Chemie GmbH, DE)
Hydroxyethylcellulose und Wasser (10 : 90)
1 Gew.teil 60 Gew. %ige Essigsäure in Wasser

Formulierung 4 b (erfindungsgemäß)

105 Gew.teile Formulierung 4 a
1,7 Gew.teile einer 40 Gew. %igen wäßrigen Dispersion eines H-Siloxans. Dieses H-Siloxan war ein lineares Polydimethylsiloxan mit durchschnittlich 45 Si-O-Einheiten, bei dem etwa 50 % der Methylgruppen durch Wasserstoff substituiert waren. Die Endgruppen waren $(CH_3)_3$ Si-Reste. Die H-Siloxan-Dispersion enthielt einen nichtionischen Dispergator.

Formulierungen 4 c und 4 d (Vergleich):

Wie Formulierung 4 a, jedoch nicht mit Dispersion von Beispiel 3 hergestellt, sondern mit Dispersion von Beispiel 1 (Formulierung 4 c) bzw. von Beispiel 2 (Formulierung 4 d).

Formulierungen 4 e und 4 f (Vergleich):

Wie Formulierungen 4 c und 4 d, jedoch jeweils 1,7 Gew.teile H-Siloxan-Emulsion (wie bei Formulierung 4 b beschrieben) zusätzlich zu 105 Gew.teilen an Formulierung 4 c) bzw. 4 d).

Formulierung 4 g: (erfindungsgemäß)

Wie Formulierung 4 a), jedoch wurde statt des in Beispiel 1 beschriebenen Baysilone® Öl T 5 das Produkt Silikonöl CT 80 000 (Firma Wacker GmbH, DE) verwendet. Silikonöl CT 80 000 ist ein unverzweigtes $\alpha$, $\omega$-Dihydroxypolydimethylsiloxan mit einer Viskosität von ca. 80 000 mPa sec bei 20 °C.

Formulierung 4 h (erfindungsgemäß)

105 Gew.teile Formulierung 4 g,
1,7 Gew.teile H-Siloxan-Dispersion (wie bei Formulierung 4 b) beschrieben).

Beispiel 5: Beschichtung von Baumwollgewebe

Mit den Formulierungen 4 a bis 4 h wurden gemusterte Baumwollgewebe (Hemdenstoff mit Leinwand-Bindung) mit einem Flächengewicht von 100 g/m² beschichtet. Die Gewebe waren über Foulard mit einer fluorhaltigen Zusammensetzung (Oleophobol® PF, Firma Pfersee Chemie GmbH, DE) vorimprägniert (10 g/l Flotte an Oleophobol® PF, Flottenaufnahme ca. 90 %), getrocknet und 1 Tag gelagert worden.
Die Beschichtung erfolgte mittels Luftrakel. Nach Trocknung (120 °C, 5 min.) und Kondensation (150 °C, 5 min) betrug die Auflage auf den Geweben:

bei Formulierung 4 a: ca. 20 g/m² Gewebe
bei Formulierung 4 b: ca. 20 g/m² Gewebe
bei Formulierung 4 c: ca. 35 g/m² Gewebe
bei Formulierung 4 d: ca. 20 g/m² Gewebe
bei Formulierung 4 e: ca. 35 g/m² Gewebe
bei Formulierung 4 f: ca. 20 g/m² Gewebe
bei Formulierung 4 g: ca. 20 g/m² Gewebe
bei Formulierung 4 h: ca. 20 g/m² Gewebe

An den beschichteten, getrockneten und bei 150 °C behandelten Geweben wurde die Wasserdichtheit gemessen. Diese Bestimmungsmethode erfolgte nach DIN 53886. Die Permanenz der Wasserdichtheit wurde ermittelt, indem die Prüfung der Wasserdichtheit einerseits nach 5 Haushaltswäschen (40 °C 40 min. unter Waschmittelzusatz) und andererseits nach 3 Chemisch-Reinigungsprozessen (Gemisch aus Perchlorethylen, Wasser und Emulgatoren, 20 °C / 40 min.) wiederholt wurde.

Ergebnisse:

| Wasserdichtheit | | | |
|---|---|---|---|
| Formulierung | nach Kondensation | nach 5 Wäschen | nach Chem.Reinigung |
| 4 a | 170 | 100 | 100 |
| 4 b | 210 | 150 | 160 |
| 4 c | 80 | 60 | 15 |
| 4 d | 180 | 20 | 15 |
| 4 e | 130 | 80 | 100 |
| 4 f | 190 | 20 | 20 |
| 4 g | 180 | 100 | 100 |
| 4 h | 200 | 150 | 150 |

In dieser Tabelle entsprechen höhere Zahlen einer größeren Wasserdichtheit, (die Zahlen geben die Höhe der Wassersäule über den Geweben in mm an, siehe DIN 53 886).

Die Ergebnisse zeigen, daß die erfindungsgemäßen Formulierungen 4 a), 4 b), 4 g) und 4 h) den übrigen Formulierungen bezüglich Wasserdichtheit und deren Permanenz eindeutig überlegen sind.

**Patentansprüche**

**1.** Zusammensetzung in Form einer wäßrigen Dispersion, welche Wasser und folgende Komponenten enthält

a) ein Organopolysiloxan oder ein Gemisch von Organopolysiloxanen der Formel (I)

$$R'' - Si(R)_2 - O - [Si(R')_2 - O]_{n1} - Si(R)_2 - R'' \qquad (I)$$

worin die Reste R' unabhängig voneinander für R oder für

$$-[O - Si(R)_2]_{n2} - O\,Si(R)_2$$

R'' stehen und die Reste R'' unabhängig voneinander für R, OH oder für OR stehen, wobei jedoch mindestens zwei aller anwesenden Reste R'' für OH oder für OR stehen,
worin n1 und n2 solche Werte besitzen, daß die Viskosität dieser Komponente a) einen Wert von 100 bis 100 000, vorzugsweise von 1000 bis 10 000 mPa sec bei 20 °C besitzt,
b) ein cyclisches Organosiloxan oder ein Gemisch von cyclischen Organosiloxanen der Formel (II)

$[Si(R)_2O]_x$ (II)

worin x eine Zahl von 3 bis 8, vorzugsweise 3 oder 4 ist
c) ein Silan oder ein Gemisch von Silanen der Formel (III)

$$YX_2Si(CHZ)_p NH[(CHZ)_w NH]_q H \quad \text{(III}$$

worin p eine Zahl von 2 bis 6 und q eine Zahl von 0 bis 7, vorzugsweise 1 bis 3 ist, w eine Zahl von 2 bis 6 ist, und worin alle Reste X unabhängig voneinander für einen Rest

$$RO(CHZ-CHZ-O)_t-$$

oder für einen Rest R oder für

$$HO(CHZ-CHZ-O)_t-$$

stehen, worin t eine Zahl von 0 bis 8 ist, Z für H oder $CH_3$ steht und Y für X oder für

$$(CHZ)_p-NH[(CHZ)_w NH]_q H$$

steht,
d) einen Dispergator oder ein Gemisch von Dispergatoren, wobei vorzugsweise mindestens ein kationischer Dispergator anwesend ist und gegebenenfalls
e) ein Silan oder ein Gemisch von Silanen der Formel (IV)

$$[R'''O(CHZ-CHZ-O-)_t]_2 SiX_2 \quad \text{(IV)}$$

oder ein Produkt, das aus diesem Silan oder diesem Gemisch von Silanen in Gegenwart von Wasser durch Hydrolyse und nachfolgende Kondensation unter Wasserabspaltung entsteht,
worin alle Reste X unabhängig voneinander sowie Z und t die oben genannten Bedeutungen besitzen und und wobei R'''für H oder R steht,
mit der Maßgabe, daß die Zusammensetzung mindestens eine Komponente c) oder e) enthält, in der mindestens ein Si-Atom vorliegt, an das drei oder vier Reste der Formel

$$RO(CHZ-CHZ-O)_t-$$

oder der Formel

$$HO(CHZ-CHZ-O)_t-$$

gebunden sind, wobei alle in den Komponenten a), b), c) und e) vorliegenden Reste R unabhängig voneinander Alkylreste mit 1 bis 4 C-Atomen oder Phenylreste sind, wobei die Zusammensetzung die Komponenten a), b), c) und ggf. e) entweder nur als solche oder zusätzlich dazu oder

ausschließlich in Form von Produkten enthält, die durch teilweise oder vollständige Umsetzung von zwei oder mehr dieser Komponenten miteinander entstehen.

**2.** Zusammensetzung nach Anspruch 1, dadurch gekennzeichnet, daß alle in Komponenten a), b), c) und e) anwesenden Reste R Methylreste oder Ethylreste sind.

**3.** Zusammensetzung nach Anspruch 1 oder 2, dadurch gekennzeichnet, daß die Summe der Komponenten a), b), c) und e) 75 bis 95 Gew. % aller in der Zusammensetzung anwesenden Produkte außer Wasser beträgt.

**4.** Zusammensetzung nach einem oder mehreren der Ansprüche 1 bis 3, dadurch gekennzeichnet, daß sie die Komponenten a) bis e) in folgenden Mengenverhältnissen relativ zueinander enthält.
a) 10 bis 70 Gew.teile, vorzugsweise 40 bis 70 Gew.teile
b) 10 bis 70 Gew.teile, vorzugsweise 25 bis 60 Gew.teile
c) 0,1 bis 10 Gew.teile, vorzugsweise 0,2 bis 3 Gew.teile
d) 0,1 bis 10 Gew. teile, vorzugsweise 0,5 bis 3 Gew.teile
e) 0 bis 10 Gew.teile.

**5.** Verfahren zur Behandlung, insbesondere zur Beschichtung von Fasermaterialien, insbesondere in Form von Geweben oder Maschenwaren, dadurch gekennzeichnet, daß auf die Fasermaterialien eine Zusammensetzung gemäß einem oder mehreren der Ansprüche 1 bis 4 aufgebracht wird.

**6.** Verfahren nach Anspruch 5, dadurch gekennzeichnet, daß getrennt voneinander eine wäßrige Dispersion A und eine wäßrige Dispersion B hergestellt werden, diese dann vereinigt werden und daß auf ein Fasermaterial eine Beschichtung aufgebracht wird, die eine so erhaltene Zusammensetzung enthält, wobei die Dispersion A eine Komponente a) und einen Dispergator oder ein Gemisch von Dispergatoren enthält, jedoch Komponenten b), c) und e) nicht oder nur in unwesentlicher Menge enthält, und wobei die Dispersion B eine Komponente b), eine Komponente c), einen Dispergator oder ein Gemisch von Dispergatoren sowie gegebenenfalls eine Komponente e) enthält, eine Komponente a) jedoch nicht oder nur in unwesentlichen Mengen enthält, wobei die Dispersion B die Komponenten b) und c) und gegebenenalls e) entweder als solche enthalten kann und/oder in Form von Produkten, die durch teilweise oder vollständige Umsetzung von zwei oder drei dieser Komponenten miteinander gebildet werden.

**7.** Verfahren nach Anspruch 5 oder 6, dadurch gekennzeichnet, daß zusätzlich zu der die Zusammensetzung enthaltenden Beschichtung auf die Fasermaterialien noch ein Organopolysiloxan aufgebracht wird, das zwei oder mehr an je ein Siliciumatom gebundene Wasserstoffatome enthält.

**8.** Verfahren nach einem oder mehreren der Ansprüche 5 bis 7, dadurch gekennzeichnet, daß als Fasermaterialien Flächengebilde in Form von non-wovens, Geweben oder Maschenwaren verwendet werden, die aus natürlichen, teilsynthetischen oder vollsynthetischen organischen Polymeren bestehen.